# EUROPÄISCHE PATENTANMELDUNG

(11) **EP 4 663 963 A1**
(43) Veröffentlichungstag der Anmeldung: **17.12.2025**
(21) Anmeldenummer: 25180441.5
(22) Anmeldetag: 03.06.2025
(51) Int. Cl.: F16C 13/04, F16C 19/50, B23K 37/0538

(54) **ABSTÜTZVORRICHTUNG ZUM ROTIERENDEN ABSTÜTZEN EINES ZYLINDRISCHEN KÖRPERS**

(30) Priorität: 12.06.2024 DE 102024116393; 23.07.2024 DE 202024104112 U
(71) Anmelder: IENtec GmbH, 12529 Schönefeld (DE)
(72) Erfinder: Boudier, Detlef, 12529 Schönefeld (DE)
(74) Vertreter: Manasse, Uwe

(57) **Zusammenfassung**

Abstützvorrichtung (1) zum rotierenden Abstützen eines zylindrischen Körpers, mit zwei Tragrollen (3), die an einem Oberrahmen (2) gelagert sind, mit einem den Oberrahmen (2) tragenden Zwischenrahmen (4), wobei der Oberrahmen (2) auf einer Unterseite mit einer ersten Stützfläche mit einem ersten Zylinderradius und einer ersten Zylinderachse (Z1) und der Zwischenrahmen (4) auf einer Oberseite mit einer ersten Aufnahmefläche, deren Zylinderradius mit dem ersten Zylinderradius übereinstimmt, zum Abstützen der ersten Stützfläche versehen ist, wobei der Oberrahmen (2) auf dem Zwischenrahmen (4) um die erste Zylinderachse getragen ist, mit einem den Zwischenrahmen (4) tragenden Unterrahmen (6), wobei der Zwischenrahmen (4) auf einer Unterseite mit einer zweiten Stützfläche mit einem zweiten Zylinderradius und einer zweiten Zylinderachse und der Unterrahmen (6) auf einer Oberseite mit einer zweiten Aufnahmefläche, deren Zylinderradius mit dem zweiten Zylinderradius übereinstimmt, zum Abstützen der zweiten Stützfläche versehen ist, wobei die zweite Zylinderachse senkrecht zu der ersten Zylinderachse (Z1) ist und der Zwischenrahmen auf dem Unterrahmen um die zweite Zylinderachse getragen ist.

## Beschreibung

Die Erfindung betrifft eine Abstützvorrichtung zum rotierenden Abstützen eines zylindrischen oder im Wesentlichen zylindrischen Körpers um eine im Gebrauch horizontale Rotationsachse, mit zwei Tragrollen, die in einem vorgegebenen Abstand voneinander an einem Oberrahmen um parallele, im Gebrauch zu der Rotationsachse parallele Drehachsen drehbar gelagert sind, und mit einem den Oberrahmen tragenden Zwischenrahmen.

Weiterhin betrifft die Erfindung eine Abstützvorrichtung zum rotierenden Abstützen eines zylindrischen oder im Wesentlichen zylindrischen Körpers um eine im Gebrauch horizontale Rotationsachse, mit zwei Paaren von Tragrollen, wobei jeweils ein Paar von Tragrollen an einem Oberrahmen um parallele Drehachsen gelagert sind, wobei die Tragrollen in einem vorgegebenen Abstand voneinander an dem jeweiligen Oberrahmen gelagert sind und die Drehachsen sämtlicher Tragrollen parallel zueinander sind, mit einem die beiden Oberrahmen tragenden Tragrahmen, wobei die Oberrahmen in einem Abstand voneinander, quer zu den Drehachsen gesehen, an dem Tragrahmen gehalten sind.

Derartige Abstützvorrichtungen werden insbesondere bei der Herstellung und Bearbeitung von Großrohren, bspw. von Fundamenten oder Türmen für Windenergieanlagen oder im Großbehälterbau eingesetzt, wobei solche Großrohre nicht exakt, sondern nur näherungsweise rotationssymmetrische Eigenschaften aufweisen bzw. zylindrisch sind, und bezogen auf die Rotationsachse Form- und Lageabweichungen aufweisen, die zu hohen Beanspruchungen der Tragrollen und der gesamten Abstützvorrichtung führen.

Für die Lagerung oder rotierende Abstützung eines solchen Großrohrs werden üblicherweise je zwei Abstützvorrichtungen an jedem Längsende des Rohrs verwendet, die in Bezug auf die Rotationsachse quer versetzt angeordnet sind. Möglich ist allerdings auch der Einsatz von nur einer Abstützvorrichtung je Rohrende, die unterhalb der Rotationsachse angeordnet ist, wobei dies eher bei Rohren kleineren Durchmessers sinnvoll ist.

Die genannten Großrohre werden in der Regel aus Stahlblech mit einer Dicke von bspw. 50 bis 200 mm hergestellt, welches in gebogenen Sektionen angeliefert und vor Ort verschweißt wird.

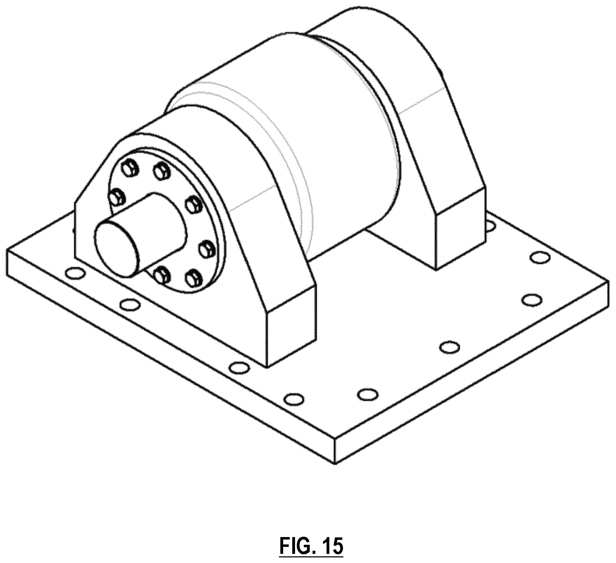

Aus der Praxis sind beispielsweise Abstützvorrichtungen gemäß Fig. 15 bekannt, bei der lediglich eine einzige Rolle vorhanden ist, die starr gelagert ist und somit nicht in der Lage ist, Ungenauigkeiten im Rundlauf auszugleichen. Dadurch werden schnell Lastgrenzen bzw. Kantenpressungen erreicht, die zu Beschädigungen führen können.

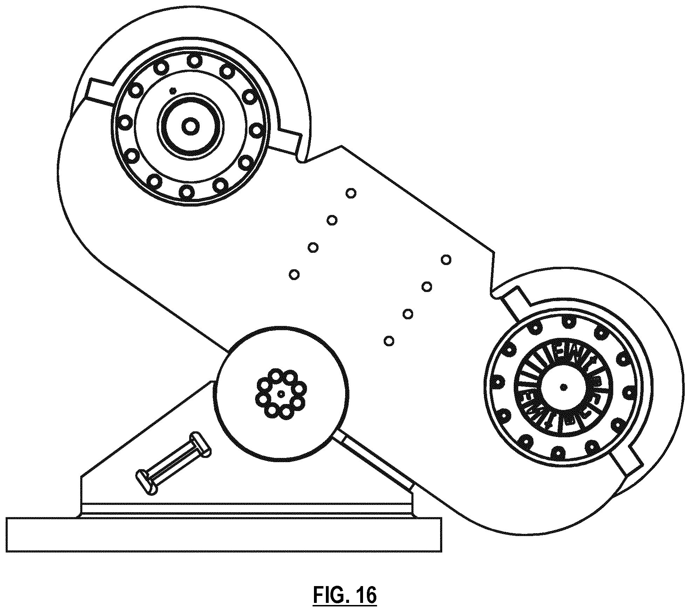

Weiterhin ist aus der Praxis eine gattungsgemäße Vorrichtung gemäß Fig. 16 bekannt, bei der zwei parallele Tragrollen an einem Oberrahmen drehbar gelagert sind, der wippenartig um eine horizontale Drehachse an einem Grundgestell gelagert sind. Auch hier besteht ein Problem in den auftretenden Kantenpressungen, die bei Abweichungen eines abzustützenden Körpers von der Rotationssymmetrie auftreten.

Auch Durchbiegungen entlang der Rotationsachse, die aufgrund der Größe und Länge aktueller Bauteile nicht zu vermeiden sind, führen zu erhöhten Kantenpressungen. Obwohl die dargestellte Vorrichtung in Bezug auf die Achse der Wippenkonstruktion selbstjustierend ist, gilt dies nicht in Bezug auf eine Anpassung bzw. Justierung in Bezug auf die genannten Durchbiegungen entlang der Rotationsachse.

Die Aufgabe der Erfindung besteht darin, eine gattungsgemäße Vorrichtung zum rotierenden Abstützen eines zylindrischen Körpers dahingehend zu verbessern, dass auch sehr große und schwere zylindrische Körper mit Geometrieabweichungen von der Rotationssymmetrie bezüglich der Rotationsachse so abgestützt werden können, dass weder an den Lagerstellen der Tragrollen und des Oberrahmens zu hohe Oberflächenpressungen noch an den Tragrollen zu hohe Kantenpressungen auftreten.

Diese Aufgabe wird erfindungsgemäß durch eine Abstützvorrichtung zum rotierenden Abstützen eines zylindrischen Körpers um eine Rotationsachse gelöst, mit zwei Tragrollen, die in einem vorgegebenen Abstand voneinander an einem Oberrahmen um parallele Drehachsen drehbar gelagert sind, mit einem den Oberrahmen tragenden Zwischenrahmen, wobei sich die Vorrichtung dadurch auszeichnet, dass der Oberrahmen auf einer zu dem Zwischenrahmen weisenden Unterseite mit einer ersten zylindrischen Stützfläche mit einem ersten Zylinderradius und einer ersten Zylinderachse und der Zwischenrahmen auf einer zu dem Oberrahmen weisenden Oberseite mit einer ersten zylindrischen Aufnahmefläche, deren Zylinderradius mit dem ersten Zylinderradius übereinstimmt, zum schwenkbaren Abstützen der ersten Stützfläche versehen ist, wobei die erste Zylinderachse parallel zu den Drehachsen der Tragrollen ist und der Oberrahmen über die erste Stützfläche auf dem Zwischenrahmen um die erste Zylinderachse schwenkbar getragen ist, mit einem den Zwischenrahmen tragenden Unterrahmen, wobei der Zwischenrahmen auf einer zu dem Unterrahmen weisenden Unterseite mit einer zweiten zylindrischen Stützfläche mit einer zweiten Zylinderachse und einem zweiten Zylinderradius und der Unterrahmen auf einer zu dem Zwischenrahmen weisenden Oberseite mit einer zweiten zylindrischen Aufnahmefläche, deren Zylinderradius mit dem ersten Zylinderradius übereinstimmt, versehen ist, wobei die zweite Zylinderachse senkrecht zu der ersten Zylinderachse ist, und wobei der Zwischenrahmen auf dem Unterrahmen um die zweite Zylinderachse schwenkbar getragen ist.

Die Aufgabe der Erfindung wird weiterhin gelöst durch eine Abstützvorrichtung zum rotierenden Abstützen eines zylindrischen Körpers um eine Rotationsachse, mit zwei Paaren von Tragrollen, wobei jeweils ein Paar von Tragrollen an einem Oberrahmen um parallele Drehachsen gelagert sind und sämtliche Drehachsen parallel zueinander sind, mit einem die beiden Oberrahmen in einem gegenseitigen Abstand tragenden Tragrahmen, wobei die Oberrahmen in einem Abstand voneinander, quer zu den Drehachsen gesehen, an dem Tragrahmen gehalten sind, wobei die Oberrahmen auf einer zu dem Tragrahmen weisenden Unterseite jeweils mit einer ersten zylindrischen Stützfläche mit einem ersten Zylinderradius und einer ersten Zylinderachse und der Tragrahmen auf einer zu den Oberrahmen weisenden Oberseite mit jeweils einer ersten zylindrischen Aufnahmefläche, deren Zylinderradius mit dem ersten Zylinderradius übereinstimmt, zum schwenkbaren Abstützen der ersten Stützflächen versehen ist, wobei die erste Zylinderachsen beider Oberrahmen parallel zu den Drehachsen der Tragrollen sind und die Oberrahmen jeweils über die erste Stützfläche auf dem Tragrahmen um die ersten Zylinderachsen schwenkbar getragen sind, mit einem den Tragrahmen tragenden Zwischenrahmen, wobei der Tragrahmen auf einer zu dem Zwischenrahmen weisenden Unterseite mit einer weiteren zylindrischen Stützfläche mit einem weiteren Zylinderradius und einer weiteren Zylinderachse und der Zwischenrahmen auf einer zu dem Tragrahmen weisenden Oberseite mit einer weiteren zylindrischen Aufnahmefläche, deren Zylinderradius mit dem weiteren Zylinderradius übereinstimmt, zum schwenkbaren Abstützen der weiteren Stützfläche und des Tragrahmens versehen ist, wobei die weitere Zylinderachse parallel zu der ersten Zylinderachse ist und der Tragrahmen über die weitere Stützfläche auf dem Zwischenrahmen um die weitere Zylinderachse schwenkbar getragen ist, mit einem den Zwischenrahmen tragenden Unterrahmen, wobei der Zwischenrahmen auf einer zu dem Unterrahmen weisenden Unterseite mit einer zweiten zylindrischen Stützfläche mit einem zweiten Zylinderradius und einer zweiten Zylinderachse und der Unterrahmen auf einer zu dem Zwischenrahmen weisenden Oberseite mit einer zweiten zylindrischen Aufnahmefläche, deren Zylinderradius mit dem zweiten Zylinderradius übereinstimmt, zum schwenkbaren Abstützen der zweiten Stützfläche versehen ist, wobei die zweite Zylinderachse senkrecht zu der ersten Zylinderachse ist und der Zwischenrahmen über die zweite Stützfläche auf dem Unterrahmen um die zweite Zylinderachse schwenkbar getragen ist.

Im Gebrauch der Vorrichtung ist die erste und ggf. die weitere Zylinderachse parallel zu der Rotationsachse des Körpers und die zweite Zylinderachse horizontal und quer zu der Rotationsachse angeordnet. Die erste Stützfläche und die erste Aufnahmefläche bilden ein Schwenklager für den Oberrahmen, und die zweite Stützfläche und die zweite Aufnahmefläche bilden ein Schwenklager für den Zwischenrahmen, um zueinander senkrechte Schwenkachsen.

Da der Unterrahmen fixiert ist, beispielsweise mit einem Hallenboden oder einem Grundgestell verschraubt ist, ist der oder sind die Oberrahmen in Bezug auf den Unterrahmen bzw. ein Grundgestell in Bezug auf die beiden oder drei Zylinderachsen selbstjustierend abgestützt, so dass er sich bei Abweichungen des zylindrischen Körpers von der Rotationssymmetrie selbsttätig um die erste und/oder zweite und/oder weitere Zylinderachse verlagern kann und dadurch Abweichungen ausgleichen kann. Die erste, zweite und ggf. die weitere Zylinderachse können daher auch als Justierachsen angesehen werden, um die der oder die Oberrahmen und damit die Tragrollen selbstjustierende Ausgleichsbewegungen ausführen können.

Es kann vorgesehen sein, dass ein erster Zylinderradius der ersten Stützfläche und ersten Aufnahmefläche mindestens 50%, 80%, 100% oder 150% des gegenseitigen Abstands der Drehachsen der Tragrollen des oder eines Oberrahmens beträgt.

Weiterhin kann vorgesehen sein, dass sich die erste Zylinderachse in einer von dem Zwischenrahmen zum Oberrahmen weisenden Richtung gesehen oberhalb einer die Drehachsen der Tragrollen des oder eines Oberrahmens enthaltenden Ebene befindet.

Durch eine oder beide der letztgenannten Maßnahmen kann eine besonders günstige Kinematik der Ausgleichsbewegung der Tragrollen in Bezug auf Abweichungen des abgestützten zylindrischen Körpers von der Rotationssymmetrie erreicht werden.

Es kann vorgesehen sein, dass eine oder mehrere Tragrollen gesteuert motorisch antreibbar sind, um den abgestützten zylindrischen Körper gesteuert in Drehung zu versetzen. Es kann ein Antriebsmotor je Tragrolle vorgesehen sein, oder mehrere Tragrollen können rotatorisch miteinander gekoppelt sein, wobei dann ein Antriebsmotor genügt. Selbstverständlich kann die Drehrichtung umkehrbar sein. Alternativ können die Tragrollen freilaufend ausgebildet sein.

Es kann vorgesehen sein, dass die Tragrollen eine reibungserhöhende und/oder elastische Beschichtung aufweisen.

Die erste Stützfläche ist bevorzugt als Gleitfläche ausgebildet. Der Oberrahmen kann zwei parallel und mit gegenseitigem Abstand angeordnete erste Rahmenplatten aufweisen, die mit Verbindungselementen aneinander gehalten sind und jeweils eine zylindrisch, insbesondere konvex gebogene Außenkante aufweisen, die zusammen die erste Stützfläche bilden. Hierbei kann vorgesehen sein, dass in den ersten Rahmenplatten U-förmige Aussparungen zum Einsetzen der Tragrollen ausgebildet sind, die jeweils mit einer Abhebesicherung versehen sind, die das offene Ende der jeweiligen Aussparung verschließt.

Die erste Aufnahmefläche ist bevorzugt als Gleitfläche ausgebildet. Der Zwischenrahmen kann zwei parallel und mit gegenseitigem Abstand angeordnete zweite Rahmenplatten aufweist, die mit Verbindungselementen aneinander gehalten sind und jeweils eine zylindrisch, insbesondere konkav gebogene Außenkante aufweisen, die zusammen die erste Aufnahmefläche zur Aufnahme der ersten Stützfläche bilden.

Die Außenkanten der ersten und/oder zweiten Rahmenplatten können nut- und federartig ausgebildet sein, um quer zu den Rahmenplatten, entlang der ersten Zylinderachse, wirkende Kräfte aufnehmen zu können.

Alternativ kann vorgesehen sein, dass die erste Stützfläche oder die erste Aufnahmefläche als Rollenbahn zum Abrollen auf der als Abrollfläche ausgebildeten ersten Aufnahmefläche oder ersten Stützfläche ausgebildet ist.

Die zweite Stützfläche ist bevorzugt als Gleitfläche ausgebildet. Der Zwischenrahmen kann zwei parallel und mit gegenseitigem Abstand angeordnete Lagerelemente aufweisen, die quer zu den ersten und zweiten Rahmenplatten angeordnet sind und an den zweiten Rahmenplatten gehalten sein können. Die Lagerelemente können zylindrisch, insbesondere konvex gebildete erste Lagerflächen aufweisen, die zusammen die zweite Stützfläche bilden.

Die zweite Aufnahmefläche ist bevorzugt als Gleitfläche ausgebildet. Der Unterrahmen kann zwei zylindrisch, insbesondere konkav gebildete zweite Lagerflächen zur Aufnahme der ersten Lagerflächen der Lagerelemente aufweisen.

Analog ist bevorzugt vorgesehen, dass die weitere Stützfläche und die weitere Aufnahmefläche als Gleitflächen ausgebildet sind.

Alternativ kann vorgesehen sein, dass die zweite Stützfläche oder die zweite Aufnahmefläche als Rollenbahn zum Abrollen auf der als Abrollfläche ausgebildeten zweiten Aufnahmefläche oder zweiten Stützfläche ausgebildet ist.

Alternativ kann auch für die weitere Stütz- und Aufnahmefläche vorgesehen sein, dass eine davon als Rollenbahn und die andere als Abrollfläche ausgebildet ist.

Der zweite Zylinderradius ist bevorzugt grösser, insbesondere wesentlich grösser als der erste Zylinderradius, bspw. 2, 5, 10 oder 20 mal so groß wie dieser.

Es besteht die Möglichkeit, eine einzige Abstützvorrichtung an jedem Ende eines abzustützenden zylindrischen Körpers einzusetzen, wobei dann bei der Ausführung mit einem Oberrahmen die Drehachsen der beiden Tragrollen im Gebrauch in einer im wesentlichen horizontalen Ebene liegen bzw. bei einer Ausführung mit zwei Oberrahmen die Tragrollenpaare symmetrisch einer vertikalen Längsmittelebene liegen und der zylindrische Körper mittig darüber angeordnet ist. Eine solche Verwendung ist bis zu gewissen Durchmessergrößen sinnvoll.

Bei zylindrischen Körpern mit sehr großen Durchmessern ist hingegen die Verwendung von zwei in einem horizontalen Querabstand angeordneten Abstützvorrichtungen an jedem Ende des Körpers zweckmäßig, wobei der zylindrische Körper mit seiner horizontalen Rotationsachse mittig und parallel zu den Drehachsen der Tragrollen zwischen den und oberhalb der beiden bzw. insgesamt vier Abstützvorrichtungen abgestützt ist. Hierbei ist von je zwei an jedem Ende des Körpers angeordneten erfindungsgemäßen Vorrichtungen eine Abstützanordnung gebildet, die zwei erfindungsgemäße Abstützvorrichtungen umfasst.

Die Abstützanordnung kann ein Grundgestell umfassen, auf dem die beiden Abstützvorrichtungen mit gegenseitigem Querabstand gehalten sind, wobei die Abstützvorrichtungen in einer Richtung zueinander oder voneinander weg verlagerbar gehalten sein können. Der gegenseitige Abstand kann hydraulisch oder elektromechanisch verstellbar sein, um die Abstützanordnung an unterschiedliche Durchmesser von abzustützenden Körpern anpassen zu können.

Zur bestmöglichen Anpassung an die geometrischen Gegebenheiten, wobei eine die beiden Drehachsen einer Abstützvorrichtung mit einem Oberrahmen enthaltende Ebene unter einem Winkel von beispielsweise bis zu 5 Grad, 10 Grad, 20 Grad oder mehr zur Horizontalen geneigt ist, kann es zweckmäßig sein, den Oberrahmen und damit die erste Stützfläche und auch die erste Aufnahmefläche außermittig oder seitlich versetzt in Bezug auf eine Längsmittelebene des Unterrahmens anzuordnen, so dass eine Ausgangsposition der beiden Tragrollen eine Position ist, in der die die Drehachsen enthaltende Ebene die genannte Neigung zur Horizontalen aufweist. Eine solche außermittige Anordnung hat den Vorteil, dass Tragkräfte, die nicht senkrecht, sondern schräg von oben wirken, besser aufgenommen werden können als bei einer symmetrischen Ausbildung, und eignet sich daher besser im Falle einer Abstützanordnung mit zwei Abstützvorrichtungen, bei der jede Abstützvorrichtung unterhalb und seitlich versetzt zu der Rotationsachse angeordnet ist.

Eine analoge Ausrichtung der Oberrahmen und des Tragrahmens ist auch bei einer Ausführung mit zwei Oberrahmen zweckmäßig.

In einer weiteren Variante der Erfindung kann bei einer Abstützvorrichtung oder Abstützanordnung vorgesehen sein, dass sämtliche Tragrollen antriebslos ausgebildet sind und eine reine Stützfunktion übernehmen, während eine separate bzw. externe Antriebseinrichtung für den abzustützenden Körper vorhanden ist, die mit dem Körper koppelbar ist, um den Körper in Drehung zu versetzen.

Weitere Vorteile und Merkmale der Erfindung ergeben sich aus der nachfolgenden Beschreibung einer bevorzugten Ausführungsform, wobei auf eine Zeichnung Bezug genommen ist, in der
Fig. 1 eine perspektivische Gesamtansicht einer erfindungsgemäßen Abstützvorrichtung zum rotierenden Abstützen eines zylindrischen Körpers nach einer ersten Ausführungsform zeigt,
Fig. 2 eine teilweise auseinandergezogene Ansicht der Vorrichtung nach Fig. 1 zeigt,
Fig. 3 eine auseinandergezogene Ansicht des Oberrahmens und der Tragrollen der Vorrichtung nach Fig. 1 und 2 zeigt,
Fig. 4 eine auseinandergezogene Ansicht des Zwischenrahmens der Vorrichtung nach Fig. 1 und 2 zeigt,
Fig. 5 eine perspektivische Ansicht des Unterrahmens der Vorrichtung nach Fig. 1 und 2 zeigt,
Fig. 6 den Abstützvorgang eines zylindrischen Körpers mittels einer erfindungsgemäßen Abstützanordung in Längsansicht zeigt,
Fig. 7 den Abstützvorgang eines zylindrischen Körpers mittels zwei erfindungsgemäßer Abstützanordnungen in einer perspektivischen Ansicht zeigt,
Fig. 8 eine vergrößerte Einzelheit aus Fig. 6 in einer Querschnittsansicht zeigt,
Fig. 9 eine ähnliche Ansicht wie Fig. 8 in einer Längsansicht von außen zeigt,
Fig. 10 eine Längsschnittansicht entlang Schnittlinie A-A in Fig. 9 zeigt,
Fig. 11 bis 14 Ansichten einer zweiten Ausführungsform einer Abstützvorrichtung und Abstützanordnung zeigen, bei der jeweils zwei Oberrahmen und zwei Paare von Tragrollen vorhanden sind,
Fig. 15 und 16 Vorrichtungen aus dem Stand der Technik zeigen.

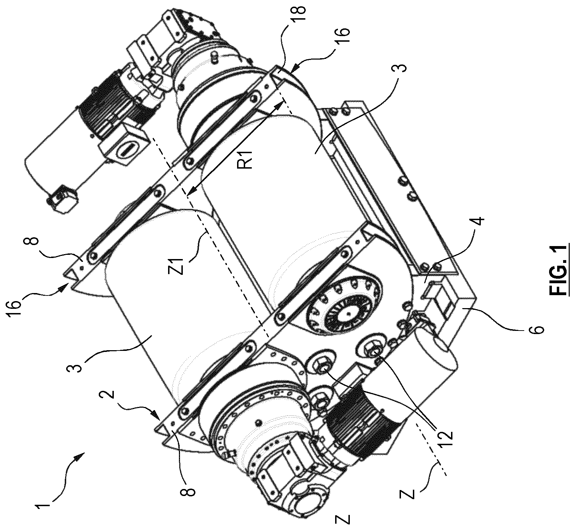

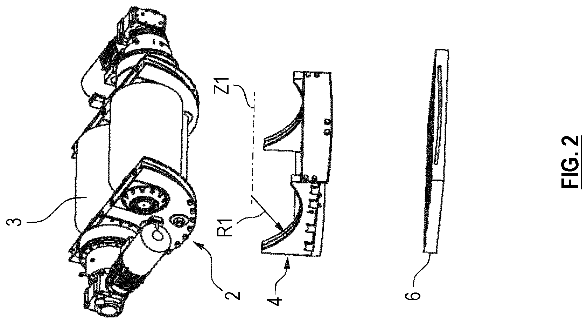

Eine erfindungsgemäße Abstützvorrichtung 1 in einer ersten Ausführungsform, wie sie in Fig. 1 und 2 dargestellt ist, umfasst einen Oberrahmen 2, an dem in einem gegenseitigen Abstand d zwei Tragrollen 3 mit parallelen Drehachsen Z gelagert sind, einen den Oberrahmen 2 tragenden Zwischenrahmen 4 und einen den Zwischenrahmen 4 tragenden Unterrahmen 6.

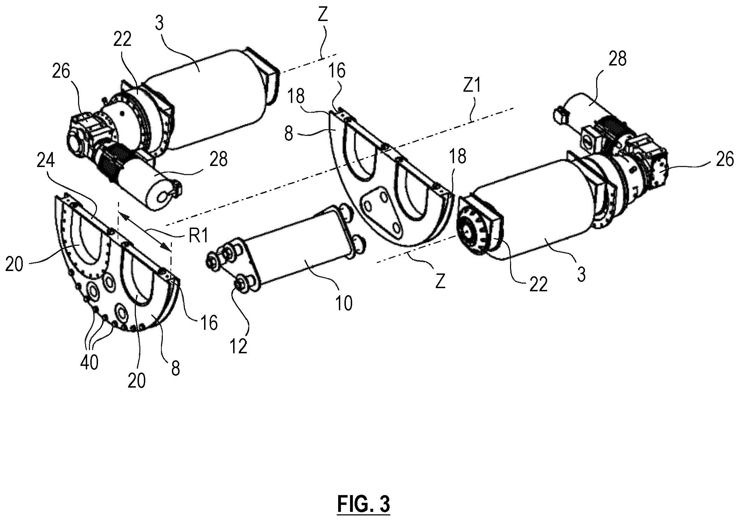

Wie Fig. 3 weiter zeigt, weist der Oberrahmen 2 zwei parallele erste Rahmenplatten 8 auf, die durch Verbindungselemente starr miteinander verbunden sind. Die Verbindungselemente umfassen eine Druckeinheit 10 (Fig. 3), die mittels Zugankern 12 mit den ersten Rahmenplatten 8 fest verspannt ist. Jede erste Rahmenplatte 8 hat eine zylindrisch konvex geformte Außenkante 16, die zusammen eine erste zylindrische Stützfläche 2c mit einem ersten Zylinderradius R1 und einer ersten Zylinderachse Z1 bilden. Die Außenkanten 16 sind mit seitlich angeordneten flanschartigen Begrenzungen 18 versehen.

Die ersten Rahmenplatten 8 sind mit je zwei U-förmigen Aussparungen 20 versehen, in die Lagerungen 22 der Tragrollen 3 eingesetzt sind. Abhebesicherungen 24 verschließen offene Enden der Aussparungen, so dass die Lagerungen 22 ortsfest in den Rahmenplatten 8 gehalten sind.

Jede Tragrolle 3 ist über ein Getriebe 26 mit einem Antriebsmotor 28 gekoppelt, der steuerbar und drehrichtungsumkehrbar mit einer nicht dargestellten Steuerung verbunden ist, so dass beide Tragrollen 3 in einer gewünschten Drehrichtung und Geschwindigkeit antreibbar sind. Alternativ können die Tragrollen als Freilaufrollen ausgebildet sein.

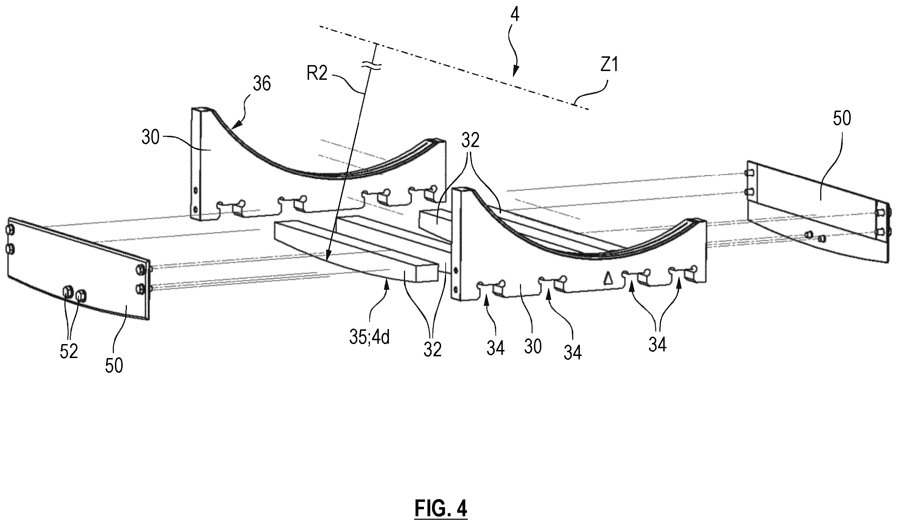

Fig. 4 erläutert den Aufbau des Zwischenrahmens 4. Dieser umfasst zwei parallel und mit gegenseitigem Abstand angeordnete zweite Rahmenplatten 30, die in ihrer Position von mehreren, hier vier, Lagerelementen 32 gehalten sind. Die Lagerelemente 32 sind in zu dem Querschnitt der Lagerelemente 32 passende Aufnahmen 34 in den zweiten Rahmenplatten 30 eingesetzt und darin fixiert, bspw. verschraubt, verschweißt oder verpresst. Jedes Lagerelement 32 weist an einer von dem Oberrahmen 2 weg weisenden Unterseite eine zylindrisch geformte erste Lagerfläche 35 mit einem zweiten Zylinderradius R2 auf. Die zweiten Rahmenplatten 30 weisen an ihrer zu dem Oberrahmen 2 weisenden Oberseite jeweils eine zylindrisch konkav gebogene Außenkante 36 mit einem Zylinderradius R1 auf, der dem ersten Zylinderradius R1 entspricht, und einer der ersten Zylinderachse Z1 entsprechenden Zylinderachse Z1, und bilden zusammen eine erste Aufnahmefläche 2d zur Aufnahme der ersten Stützfläche 2c, wobei die erste Stützfläche 2c und die erste Aufnahmefläche 2d unter Bildung einer Schwenklagerung mit Schwenkachse Z1 aneinander anliegen. Die ersten Lagerflächen 35 bilden hierbei eine zweite Stützfläche 4d.

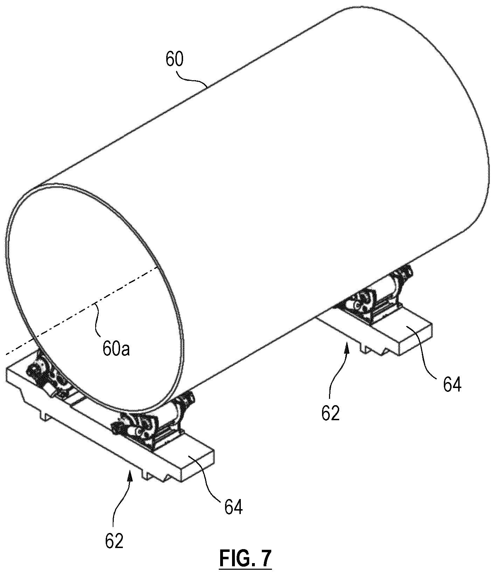

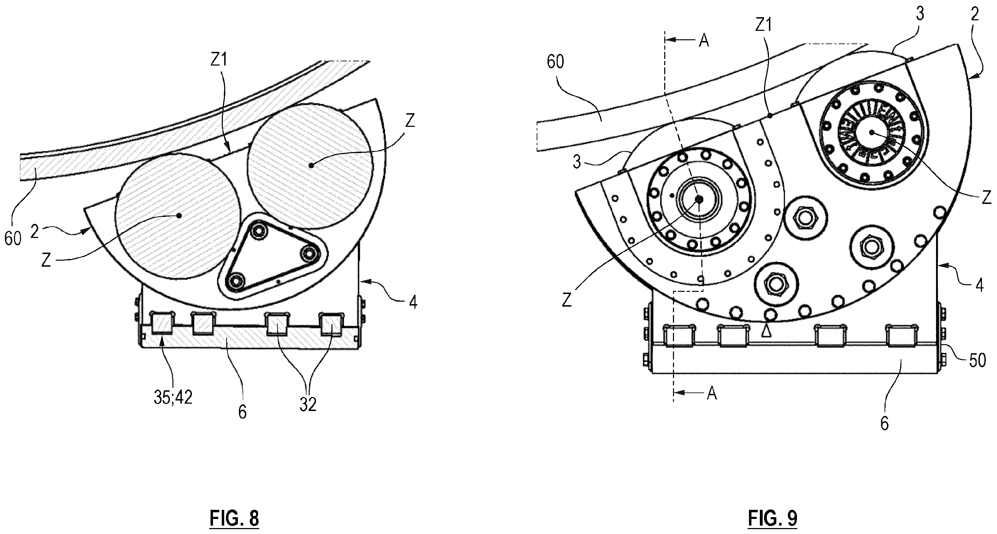

Die durch die Zylinderachse Z1 festgelegte Schwenkachse verläuft parallel zu den Drehachsen Z der Tragrollen 3 und somit im Gebrauch der Vorrichtung horizontal und parallel zu einer Längs- oder Rotationsachse (60a) des abzustützenden Körpers (60), s.a. Fig. 7 und 8.

Die zweiten Rahmenplatten 30 liegen im Bereich ihrer Außenkanten 36 zwischen den flanschartigen Begrenzungen 18 der ersten Rahmenplatten 8, so dass eine nut- und federartige Anordnung gebildet ist, mit der Kräfte quer zu den ersten und zweiten Rahmenplatten aufgenommen werden können.

Wie Fig. 3 zeigt, sind die ersten Rahmenplatten 8 mit Abhebesicherungen in Form von Schrauben 40 versehen, die mit den zweiten Rahmenplatten 30 zusammenwirken und verhindern, dass die ersten Rahmenplatten von den zweiten Rahmenplatten abheben können.

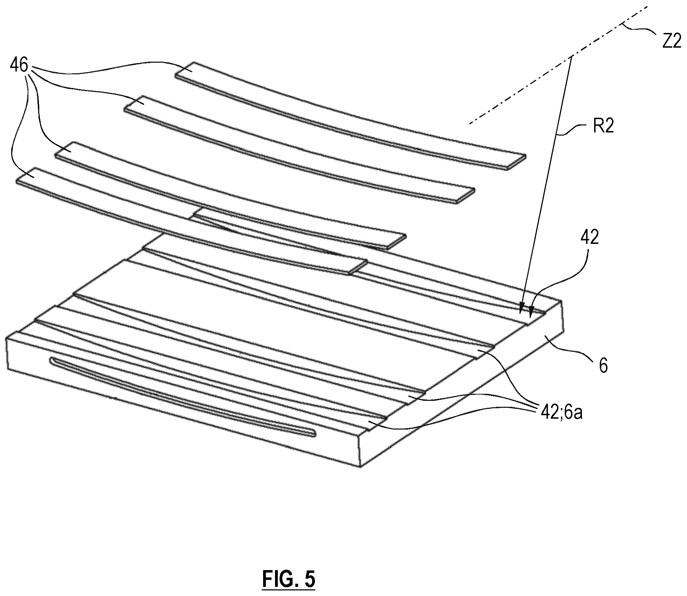

Fig. 5 zeigt den Unterrahmen 6 in einer perspektivischen Ansicht, wobei auf einer zu dem Zwischenrahmen 4 weisenden Oberseite des Unterrahmens 6 eine Anzahl, hier vier, von konkav geformten zweiten Lagerflächen 42 gebildet ist, die der Anzahl von Lagerelementen 32 des Zwischenrahmens 4 entspricht und deren Zylinderachse Z2 und Zylinderradius R2 der Zylinderachse Z2 und dem zweiten Zylinderradius R2 der Lagerelemente 32 entsprechen, wobei jede zweite Lagerfläche 42 gegen eine erste Lagerfläche 35 eines Lagerelements 32 anliegt und diese aufnimmt, so dass eine Schwenklagerung mit einer Schwenkachse Z2 gebildet ist. Die zweiten Lagerflächen 42 bilden hierbei eine zweite Aufnahmefläche 6a.

Die Zylinderachse Z2 verläuft senkrecht zu der ersten Zylinderachse Z1 und zu den Drehachsen Z der Tragrollen und ist im Gebrauch der Vorrichtung horizontal.

Fig. 5 zeigt weiter die Anordnung von Gleitelementen 46, die zwischen Unter- und Zwischenrahmen positioniert werden können, um im Betrieb auftretenden Verschleiß zu minimieren. In diesem Fall stimmt genau genommen die Lage der Zylinderachse der Lagerflächen 42 des Unterrahmens 6 mit der Lage der Zylinderachse der Lagerflächen 34 der Lagerelemente 32 nicht exakt überein, sondern unterscheidet sich davon um die Dicke der Gleitelemente 46.

Wie Fig. 4 erkennen lässt, ist quer zu den zweiten Rahmenplatten 30 des Zwischenrahmens 4 jeweils stirnseitig eine Endplatte 50 befestigt, die zum einen der Verbindung der zweien Rahmenplatten 30 und zum anderen als Abhebesicherung dient, wofür Schrauben 52 in den Endplatten 50 vorgesehen sind, die in eine Aussparung in dem Unterrahmen 6 eingreifen, um ein Abheben des Zwischenrahmens 4 von dem Unterrahmen 6 zu verhindern.

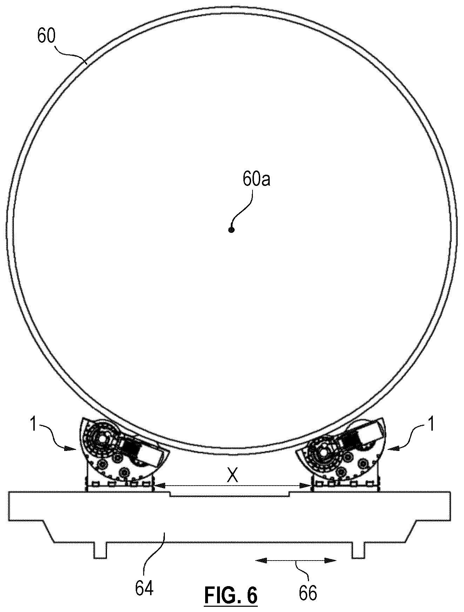

Fig. 6 und 7 erläutern die Verwendung von erfindungsgemäßen Abstützvorrichtungen und Abstützanordnungen in unterschiedlichen Ansichten. Ein rotierend abzustützender Körper 60, der eine Längs- und Rotationsachse 60a aufweist, hier in Form eines Rohres aus Stahlblech mit einem großen Durchmesser von mehreren Metern, insbesondere ein Segment eines Turms einer Windenergieanlage, ist auf zwei Abstützanordnungen 62 aufgenommen, die jeweils im Bereich eines Längsendes des Körpers 60 positioniert sind. Jede Abstützanordnung 62 umfasst zwei Abstützvorrichtungen 1, die auf einem Grundgestell 64 entweder fest oder in Querrichtung 66 verstellbar gehalten sind. Im letztgenannten Fall kann ein gegenseitiger Abstand x der Abstützvorrichtungen 1 verstellbar sein, wofür ein nicht im Einzelnen dargestellter hydraulischer oder elektromechanischer Verstellmechanismus vorgesehen sein kann. Die Tragrollen bzw. mindestens eine davon kann antreibbar sein, oder zwischen den Abstützanordnungen kann eine externe Antriebseinrichtung vorgesehen sein, die mit dem Körper gekoppelt oder koppelbar ist, z.B. in Form eines Reibradantriebs, um den Körper in Drehung zu versetzen.

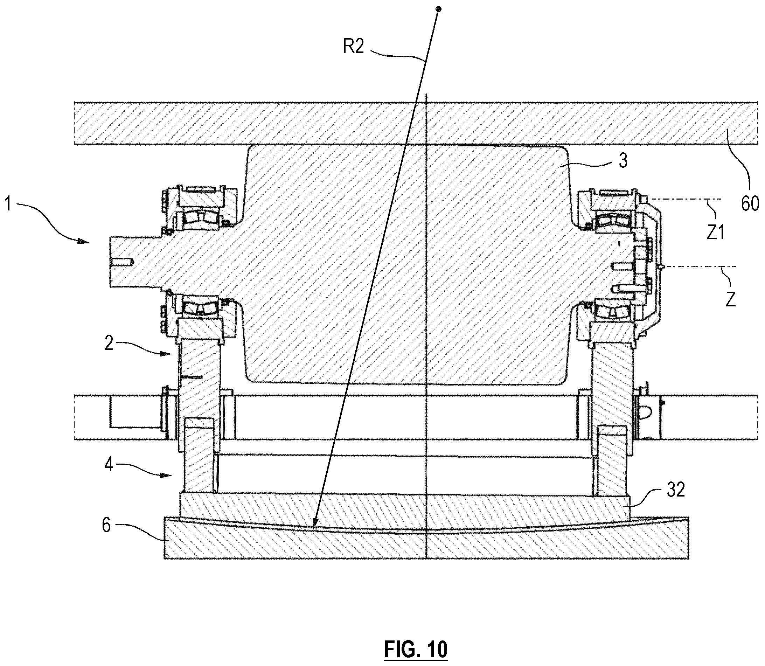

Fig. 8 und 9 zeigen eine Abstützvorrichtung 1 im Zusammenwirken mit dem abgestützten Körper 60 in Längs- und Querschnittsansichten sowie Fig 10 in einer Längsschnittansicht entlang der in Fig. 9 eingetragenen Schnittlinie A-A. Der Körper 60 ist für eine Rotation um seine Längs- und Rotationsachse 60a abgestützt. Bei Abweichungen der Außenkontur des Körpers 60 von der Rotationssymmetrie ist die Abstützvorrichtung in der Lage, die Orientierung der Drehachsen Z der Tragrollen 3 durch selbsttätige, allein durch die variierenden Auflagekräfte des Körpers 60 auf den Tragrollen 3, Ausgleichsbewegungen des Oberrahmens 2 um die erste Schwenk- oder Zylinderachse Z1 und/oder des Zwischenrahmens 4 um die zweite Schwenk- oder Zylinderachse Z2 an die jeweilige Geometrie des Körpers 60 anzupassen, so dass stets eine optimale Anlage der Tragrollen an die Oberfläche des Körpers 60 gewährleistet ist.

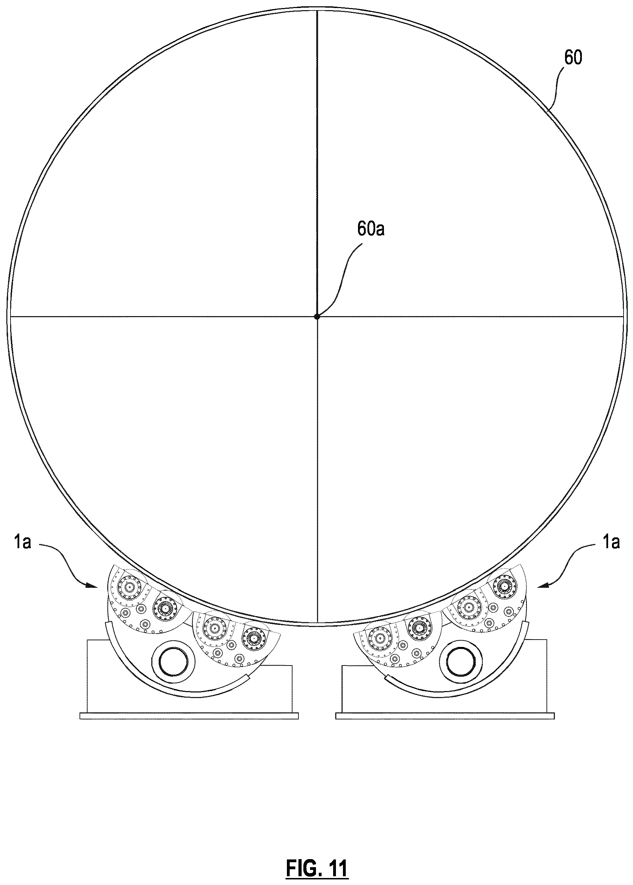

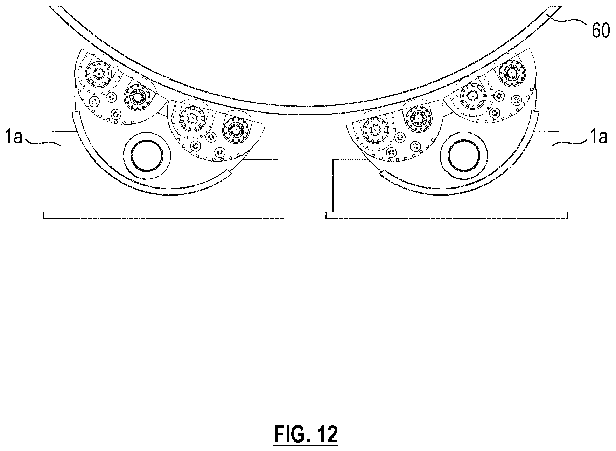

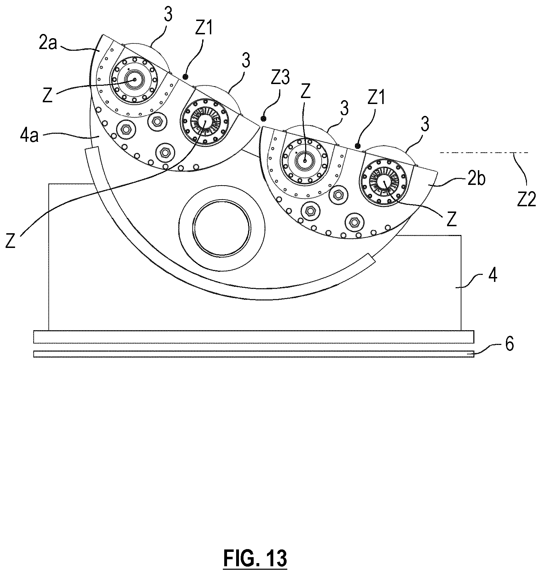

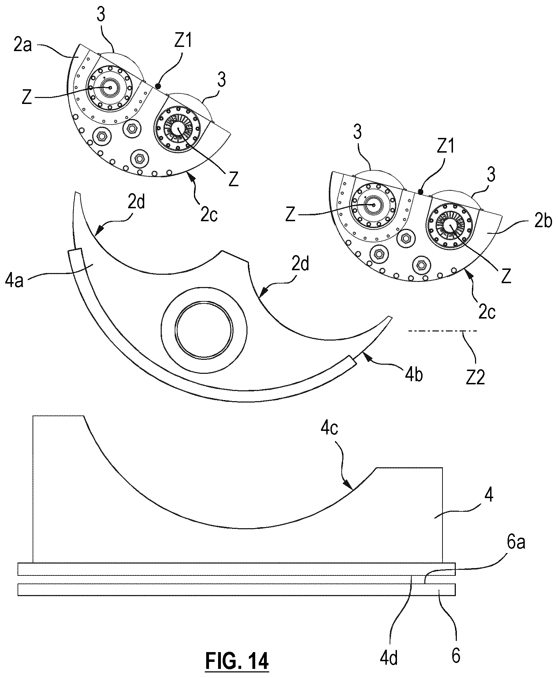

Fig. 11 zeigt eine Längsansicht eines zylindrischen Körpers 60 mit Längs- und Rotationsachse 60a, der von zwei bzw. vier Abstützvorrichtungen 1a nach einer zweiten Ausführungsform abgestützt ist. Fig 12 zeigt eine vergrößerte Ansicht der Abstützvorrichtungen, Fig 13 eine vergrößerte Ansicht einer einzelnen Abstützvorrichtung und Fig. 14 eine auseinandergezogene Ansicht der Abstützvorrichtung nach Fig. 13.

Wie am besten aus Fig. 13 und 14 ersichtlich ist, sind zwei Oberrahmen 2a, 2b mit jeweils einem Paar von daran gelagerten Tragrollen 3 auf einem Tragrahmen 4a schwenkbar gelagert. Die Oberrahmen 2a, 2b sind bei horizontaler Ausrichtung des Tragrahmens quer zur Längsrichtung bzw. in Richtung der unten erläuterten zweiten Zylinderachse Z2 beabstandet angeordnet und haben jeweils eine zylindrische, zu dem Tragrahmen weisende erste Stützfläche 2c. Der Tragrahmen 4a hat zwei zylindrische, zu den Oberrahmen weisende erste Aufnahmeflächen 2d zur gleitlagerartigen Aufnahme der ersten Stützflächen 2c. Dadurch sind die Oberrahmen um parallel zu den Drehachsen Z der Tragrollen 3 verlaufende erste Zylinderachsen Z1 schwenkbar gelagert.

Der Tragrahmen 4a weist auf seiner zu einem Zwischenrahmen 4 weisenden Unterseite eine weitere zylindrische Stützfläche 4b mit einer weiteren Zylinderachse Z3 auf, die einer weiteren zylindrischen Aufnahmefläche 4c des Zwischenrahmens 4 gegenübersteht und im Gebrauch von dieser gleitlagerartig abgestützt ist. Somit ist der Tragrahmen 4a um die weitere Zylinderachse Z3, die parallel zu den Drehachsen Z der Tragrollen 3 und zu den ersten Zylinderachsen Z1 ist, schwenkbar auf dem Zwischenrahmen 4 gelagert.

Der Zwischenrahmen 4 ist wie bei der ersten Ausführungsform an seiner zu einem Unterrahmen 6 weisenden Unterseite mit einer zweiten zylindrischen Stützfläche mit einer zweiten Zylinderachse Z2 versehen, die einer zweiten zylindrischen Aufnahmefläche mit Zylinderachse Z2 des Unterrahmens 6 gegenübersteht und im Gebrauch von dieser gleitlagerartig abgestützt ist. Die zweite Zylinderachse Z2 verläuft senkrecht zu den ersten Zylinderachsen Z1 und den Drehachsen Z der Tragrollen 3 und im Gebrauch horizontal. Damit ist der Zwischenrahmen 4 um die zweite Zylinderachse Z2 schwenkbar auf dem Unterrahmen 6 gelagert. Der Unterrahmen 6 kann ortsfest auf einem Hallenboden o.ä. fixiert sein, oder er kann an einem Grundgestell befestigt sein oder durch ein solches gebildet sein.

Durch die Anordnung von zwei schwenkbeweglich an einem Tragrahmen gelagerten Oberrahmen mit jeweils zwei Tragrollen wird die Tragfähigkeit der Abstützvorrichtung wesentlich gesteigert, wobei gleichzeitig eine selbsttätige Anpassung der Lage und Orientierung sämtlicher Tragrollen möglich ist.

### Bezugszeichenliste

- 1, 1a: Abstützvorrichtung
- 2, 2a, 2b: Oberrahmen
- 2c: erste Stützfläche
- 2d: erste Aufnahmefläche
- 3: Tragrollen
- 4: Zwischenrahmen
- 4a: Tragrahmen
- 4b: weitere Stützfläche
- 4c: weitere Aufnahmefläche
- 4d: zweite Stützfläche
- 6: Unterrahmen
- 6a: zweite Aufnahmefläche
- 8: erste Rahmenplatte
- 10: Druckeinheit
- 12: Zuganker
- 16: Außenkante
- 18: Begrenzung
- 20: U-förmige Aussparung
- 22: Lagerung
- 24: Abhebesicherung
- 26: Getriebe
- 28: Antriebsmotor
- 30: zweite Rahmenplatte
- 32: Lagerelement
- 34: Aufnahme
- 35: erste Lagerfläche
- 36: Außenkante
- 40: Schraube
- 42: zweite Lagerfläche
- 46: Gleitelemente
- 50: Endplatte
- 52: Schraube
- 60: Körper
- 60a: Längs- und Rotationsachse
- 62: Abstützanordnung
- 64: Grundgestell
- 66: Querrichtung

- R1: erster Zylinderradius
- R2: zweiter Zylinderradius
- x: Abstand
- Z: Drehachse (von 3)
- Z1: erste Zylinderachse
- Z2: zweite Zylinderachse
- Z3: weitere Zylinderachse

## Patentansprüche

1. Abstützvorrichtung (1) zum rotierenden Abstützen eines zylindrischen Körpers um eine Rotationsachse (60a), mit zwei Tragrollen (3), die in einem vorgegebenen Abstand voneinander an einem Oberrahmen (2) um parallele Drehachsen (Z) drehbar gelagert sind, mit einem den Oberrahmen (2) tragenden Zwischenrahmen (4), **dadurch gekennzeichnet, dass** der Oberrahmen (2) auf einer zu dem Zwischenrahmen (4) weisenden Unterseite mit einer ersten zylindrischen Stützfläche mit einem ersten Zylinderradius und einer ersten Zylinderachse (Z1) und der Zwischenrahmen (4) auf einer zu dem Oberrahmen (2) weisenden Oberseite mit einer ersten zylindrischen Aufnahmefläche, deren Zylinderradius mit dem ersten Zylinderradius übereinstimmt, zum schwenkbaren Abstützen der ersten Stützfläche versehen ist, wobei die erste Zylinderachse (Z1) parallel zu den Drehachsen (Z) der Tragrollen (3) ist und der Oberrahmen (2) über die erste Stützfläche auf dem Zwischenrahmen (4) um die erste Zylinderachse (Z1) schwenkbar getragen ist, mit einem den Zwischenrahmen (4) tragenden Unterrahmen (6), wobei der Zwischenrahmen (4) auf einer zu dem Unterrahmen (6) weisenden Unterseite mit einer zweiten zylindrischen Stützfläche mit einem zweiten Zylinderradius und einer zweiten Zylinderachse (Z2) und der Unterrahmen (6) auf einer zu dem Zwischenrahmen (4) weisenden Oberseite mit einer zweiten zylindrischen Aufnahmefläche, deren Zylinderradius mit dem zweiten Zylinderradius übereinstimmt, zum schwenkbaren Abstützen der zweiten Stützfläche versehen ist, wobei die zweite Zylinderachse (Z2) senkrecht zu der ersten Zylinderachse (Z1) ist und der Zwischenrahmen (4) über die zweite Stützfläche auf dem Unterrahmen (6) um die zweite Zylinderachse (Z2) schwenkbar getragen ist.

2. Abstützvorrichtung (1a) zum rotierenden Abstützen eines zylindrischen Körpers um eine Rotationsachse (60a), mit zwei Paaren von Tragrollen (3), wobei jeweils ein Paar von Tragrollen (3) an einem Oberrahmen (2a, 2b) um Drehachsen (Z) gelagert ist, wobei die Tragrollen (3) in einem vorgegebenen Abstand voneinander an dem jeweiligen Oberrahmen (2a, 2b) gelagert sind und sämtliche Drehachsen (Z) parallel zueinander sind, mit einem die beiden Oberrahmen (2) in einem gegenseitigen Abstand tragenden Tragrahmen (4a), wobei die Oberrahmen (2a, 2b) auf einer zu dem Tragrahmen (4a) weisenden Unterseite jeweils mit einer ersten zylindrischen Stützfläche mit einem ersten Zylinderradius und einer ersten Zylinderachse (Z1) und der Tragrahmen (4a) auf einer zu den Oberrahmen (2) weisenden Oberseite mit jeweils einer ersten zylindrischen Aufnahmefläche, deren Zylinderradius mit dem ersten Zylinderradius übereinstimmt, zum schwenkbaren Abstützen der ersten Stützflächen versehen ist, wobei die erste Zylinderachsen (Z1) beider Oberrahmen (2a, 2b) parallel zu den Drehachsen (Z) der Tragrollen (3) sind und die Oberrahmen (2a, 2b) jeweils über die erste Stützfläche auf dem Tragrahmen (4a) um die ersten Zylinderachsen (Z1) schwenkbar getragen sind, mit einem den Tragrahmen (4a) tragenden Zwischenrahmen (4), wobei der Tragrahmen (4a) auf einer zu dem Zwischenrahmen (4) weisenden Unterseite mit einer weiteren zylindrischen Stützfläche mit einem weiteren Zylinderradius und einer weiteren Zylinderachse (Z3) und der Zwischenrahmen (4) auf einer zu dem Tragrahmen (4a) weisenden Oberseite mit einer weiteren zylindrischen Aufnahmefläche, deren Zylinderradius mit dem weiteren Zylinderradius übereinstimmt, zum schwenkbaren Abstützen der weiteren Stützfläche und des Tragrahmens (4a) versehen ist, wobei die weitere Zylinderachse (Z3) parallel zu der ersten Zylinderachse (Z1) ist und der Tragrahmen (4a) über die weitere Stützfläche auf dem Zwischenrahmen (4) um die weitere Zylinderachse (Z3) schwenkbar getragen ist, mit einem den Zwischenrahmen (4) tragenden Unterrahmen (6), wobei der Zwischenrahmen (4) auf einer zu dem Unterrahmen (6) weisenden Unterseite mit einer zweiten zylindrischen Stützfläche mit einem zweiten Zylinderradius und einer zweiten Zylinderachse (Z2) und der Unterrahmen (6) auf einer zu dem Zwischenrahmen (4) weisenden Oberseite mit einer zweiten zylindrischen Aufnahmefläche, deren Zylinderradius mit dem zweiten Zylinderradius übereinstimmt, zum schwenkbaren Abstützen der zweiten Stützfläche versehen ist, wobei die zweite Zylinderachse (Z2) senkrecht zu der ersten Zylinderachse (Z1) ist und der Zwischenrahmen (4) über die zweite Stützfläche auf dem Unterrahmen (6) um die zweite Zylinderachse (Z2) schwenkbar getragen ist.

3. Abstützvorrichtung nach Anspruch 1 oder 2, **dadurch gekennzeichnet, dass** der erste Zylinderradius (Z1) der ersten Stützfläche und der ersten Aufnahmefläche mindestens 50%, 80%, 100% oder 150% des gegenseitigen Abstands der Drehachsen (Z) der Tragrollen (3) in dem oder einem Oberrahmen (2, 2a, 2b) beträgt.

4. Abstützvorrichtung nach Anspruch 1, 2 oder 3, **dadurch gekennzeichnet, dass** sich die erste Zylinderachse (Z1) in einer von dem Zwischenrahmen (4) zum Oberrahmen (2) weisenden Richtung gesehen oberhalb einer die Drehachsen (Z) der Tragrollen (3) in dem oder einem Oberrahmen (2, 2a, 2b) enthaltenden Ebene befindet.

5. Abstützvorrichtung nach einem der vorangehenden Ansprüche, **dadurch gekennzeichnet, dass** der oder jeder Oberrahmen (2) zwei parallel und mit gegenseitigem Abstand angeordnete erste Rahmenplatten (8) aufweist, die mit Verbindungselementen (10, 12) aneinander gehalten sind und jeweils eine zylindrisch, insbesondere konvex gebogene Außenkante (16) aufweisen, die zusammen die erste Stützfläche bilden.

6. Abstützvorrichtung nach Anspruch 5, **dadurch gekennzeichnet, dass** in den ersten Rahmenplatten (8) U-förmige Aussparungen (20) zum Einsetzen der Tragrollen (3) ausgebildet sind, die jeweils mit einer Abhebesicherung (24) versehen sind, die das offene Ende der jeweiligen Aussparung (20) verschließt.

7. Abstützvorrichtung nach einem der vorangehenden Ansprüche, **dadurch gekennzeichnet, dass** der Zwischenrahmen (4) zwei parallel und mit gegenseitigem Abstand angeordnete zweite Rahmenplatten (30) aufweist, die mit Verbindungselementen aneinander gehalten sind und jeweils eine zylindrisch, insbesondere konkav gebogene Außenkante (36) aufweisen, die zusammen die erste Aufnahmefläche zur Aufnahme der ersten Stützfläche bilden.

8. Abstützvorrichtung nach einem der vorangehenden Ansprüche, **dadurch gekennzeichnet, dass** die Außenkanten (16) der ersten und/oder zweiten Rahmenplatten (8, 30) nut- und federartig ausgebildet sind, um quer zu den Rahmenplatten, entlang der ersten Zylinderachse (Z1), wirkende Kräfte aufnehmen zu können.

9. Abstützvorrichtung nach einem der vorangehenden Ansprüche, **dadurch gekennzeichnet, dass** der Zwischenrahmen (4) zwei parallel und mit gegenseitigem Abstand angeordnete Lagerelemente (32) aufweist, die quer zu den ersten und zweiten Rahmenplatten (8, 30) angeordnet sind und zylindrisch, insbesondere konvex gebildete erste Lagerflächen (35) aufweisen, die zusammen die zweite Stützfläche bilden.

10. Abstützvorrichtung nach einem der vorangehenden Ansprüche, **dadurch gekennzeichnet, dass** der Unterrahmen (6) zwei zylindrisch, insbesondere konkav gebildete zweite Lagerflächen (42) zur Aufnahme der ersten Lagerflächen (35) der Lagerelemente (32) aufweist.

11. Abstützvorrichtung nach einem der vorangehenden Ansprüche, **dadurch gekennzeichnet, dass** der Oberrahmen (2), die erste Stützfläche und die erste Aufnahmefläche außermittig oder seitlich versetzt in Bezug auf eine Längsmittelebene des Unterrahmens (6) angeordnet sind, wobei in einer Ausgangsstellung eine die beiden Drehachsen (Z) der Tragrollen (3) enthaltende Ebene unter einem Winkel von mindestens 5 Grad, 10 Grad, 20 Grad oder 30 Grad zur Horizontalen geneigt ist.

12. Abstützvorrichtung nach Anspruch 2, **dadurch gekennzeichnet, dass** die Oberrahmen (4), die ersten Stützflächen und die ersten Aufnahmeflächen außermittig oder seitlich versetzt in Bezug auf eine Längsmittelebene des Tragrahmens (4a) angeordnet sind, wobei in einer Ausgangsstellung der Vorrichtung eine die beiden Drehachsen (Z) der Tragrollen (3) eines Oberrahmens (4) enthaltende Ebene unter einem Winkel von mindestens 5 Grad, 10 Grad, 20 Grad oder 30 Grad zur Horizontalen geneigt ist.

13. Abstützvorrichtung nach Anspruch 2, **dadurch gekennzeichnet, dass** der Tragrahmen (4a), die weitere Stützfläche und die weitere Aufnahmefläche außermittig oder seitlich versetzt in Bezug auf eine Längsmittelebene des Unterrahmens (6) angeordnet sind, wobei in einer Ausgangsstellung eine die ersten Zylinderachsen (Z1) der Oberrahmen (4) enthaltende Ebene unter einem Winkel von mindestens 5 Grad, 10 Grad, 20 Grad oder 30 Grad zur Horizontalen geneigt ist.

14. Abstützanordnung (62) mit zwei Abstützvorrichtungen (1, 1a) nach einem der vorangehenden Ansprüche, die in einem horizontalen Abstand voneinander quer zu deren erster Zylinderachse (Z1) angeordnet sind, wobei der zylindrische Körper (60) mit seiner horizontalen Rotationsachse (60a) mittig und parallel zu den Drehachsen (Z) der Tragrollen (3) oberhalb der beiden Abstützvorrichtungen (1, 1a) abgestützt ist.

15. Abstützanordnung nach Anspruch 14, **dadurch gekennzeichnet, dass** die Abstützanordnung ein Grundgestell (64) umfasst, auf dem die beiden Abstützvorrichtungen (1, 1a) in Querrichtung verlagerbar gehalten sind, wobei der gegenseitige Abstand (x) der Abstützvorrichtungen (1, 1a) verstellbar ist.
